# DEMANDE DE BREVET EUROPEEN

(11) **EP 2 560 261 A1**
(43) Date de publication de la demande: **20.02.2013**
(21) Numéro de dépôt: 11177868.4
(22) Date de dépôt: 17.08.2011
(51) Int. Cl.: H02J 3/00, H02J 3/14, H02J 15/00, B60L 11/18

(54) **Procede de gestion d'une installation de production et de stockage d'energie renouvelable**

(71) Demandeur: Belenos Clean Power Holding AG, 2502 Bienne (CH)
(72) Inventeur: Marquis, Roger, 2825 Courchapoix (CH); Lisowski, Leszek, 2000 Neuchâtel (CH); Stauffer, Yves, 1007 Lausanne (CH); Onillon, Emmanuel, 2208 Les Hauts Geneveys (CH); Closset, Alexandre, 1313 Ferreyres (CH); El Roustom, Bahaa, 1006 Lausanne (CH)
(74) Mandataire: Ravenel, Thierry Gérard Louis

(57) **Abrégé**

L'invention concerne un procédé de gestion d'une installation de production et de stockage d'énergie (1) comportant
- des moyens (3) pour générer de l'électricité à partir d'énergie renouvelable,
- une alimentation d'un réseau électrique,
- des moyens de stockage agencés pour stocker l'énergie électrique fournie par moyens (3) pour générer de l'électricité à partir d'énergie renouvelable et par le réseau électrique,
- une unité consommatrice d'électricité (7) agencée pour utiliser l'énergie des moyens (3) pour générer de l'électricité à partir d'énergie renouvelable et/ou du réseau électrique,
- un véhicule apte à se connecter à ladite installation et à utiliser l'énergie stockée dans les moyens de stockage ou l'énergie électrique des moyens (3) pour générer de l'électricité à partir d'énergie renouvelable ou du réseau électrique,
- et des moyens de répartition (12) comprenant un répartiteur d'énergie agencé pour répartir l'énergie électrique fournie par les moyens (3) pour générer de l'électricité à partir d'énergie renouvelable et par le réseau et une interface utilisateur agencée pour commander le contrôleur de gestion, caractérisé en ce que ledit procédé comprend les étapes suivantes :
a) mesurer et analyser des paramètres de consommation du véhicule durant un laps de temps défini par l'intermédiaire de l'interface utilisateur,
b) calculer, à partir de ces mesures et analyses, des prévisions de consommation par le véhicule pour un laps de temps ultérieur équivalent au laps de temps défini ;
c) définir, en utilisant ces prévisions, des consignes et des contraintes de coûts pour le répartiteur d'énergie de sorte qu'il transfert suffisamment d'énergie issue des moyens (3) pour générer de l'électricité à partir d'énergie renouvelable vers les moyens de stockage pour satisfaire aux consignes et aux contraintes,
d) envoyer les consignes au répartiteur d'énergie (15) et transférer l'énergie issue des moyens (3) pour générer de l'électricité à partir d'énergie renouvelable vers les moyens de stockage,
caractérisé en ce que les moyens de répartition sont aptes, à momentanément, passer outre les contraintes et à utiliser le réseau pour transférer suffisamment d'énergie vers le véhicule.

## Description

### Arrière-plan de l'invention

La présente invention concerne un procédé de gestion d'une installation de production et de stockage d'énergie renouvelable et notamment d'électricité photovoltaïque. La présente invention concerne plus particulièrement une installation dans laquelle une partie au moins de l'énergie renouvelable produite est convertie en énergie électrochimique pour son stockage par décomposition de l'eau en hydrogène et oxygène ou par stockage direct dans une voiture électrique.

Le document de brevet W02009/047231 décrit une installation du type ci-dessus. L'installation décrite est une installation décentralisée qui est destinée à équiper par exemple une maison. Cette installation comporte une unité de production d'hydrogène constituée d'un électrolyseur, d'un compresseur ainsi que d'une bonbonne pour comprimer et stocker l'hydrogène produit par l'électrolyseur ; ce dernier étant alimenté par des panneaux solaires. L'installation comporte encore une pile à combustible pour produire de l'électricité à partir de l'hydrogène, et une unité de commande comprenant un onduleur, un microcontrôleur et un modem pour séparer le contrôle des panneaux avec celui de l'électrolyseur. L'électricité produite par la pile à combustible est, soit utilisée sur place, soit injectée dans le réseau.

Une installation comme celle qui vient d'être décrite présente de multiples avantages : l'énergie solaire est une énergie renouvelable disponible partout, l'électrolyseur ne consomme qu'une faible quantité d'eau, la production d'électricité dans la pile à combustible à partir de l'hydrogène ne dégage aucun produit polluant, etc. De plus, l'énergie solaire étant utilisée pour produire de l'hydrogène qui peut être stocké, ce type d'installation permet le stockage de l'énergie solaire sans recours aux traditionnelles batteries dont le prix de revient est considérable.

Or, une telle installation doit être gérée pour produire avec un rendement optimal l'électricité et l'hydrogène nécessaire.

Le document US 2009/0048716 décrit un procédé de gestion d'une installation électrique comprenant des sources d'énergie électrique renouvelable comme des panneaux solaires ou des éoliennes. L'installation peut comprendre une source d'énergie non renouvelable comme l'électricité du réseau. L'installation comprend également un système électrochimique comprenant une pile à combustible utilisant de l'hydrogène pour produire de l'électricité, cet hydrogène étant produite par un réformateur alimenté par l'électricité du réseau ou l'électricité des sources d'énergie renouvelable. Cet hydrogène peut être également utilisé pour alimenter une voiture ayant une pile à combustible. Le procédé de gestion de cette installation électrique est conçu pour minimiser les coûts. On entend par là que l'utilisation et le stockage de l'énergie électrique sous une forme quelconque dépend des coûts que cela représente. Le procédé de gestion du document US 2009/0048716 est alors configuré pour prendre en compte différentes variables comme l'heure de la journée, la consommation, le niveau de production d'énergie renouvelable. Un inconvénient de ce procédé de gestion est qu'il ne tient pas compte d'un éventuel désir de l'utilisateur. En effet, le procédé de ce document US 2009/0048716 ne prend pas en compte un éventuel besoin d'énergie urgent. En effet, le procédé de gestion utilise la consommation moyenne mesurée pour planifier la production d'électricité et gérer cette production pour que l'énergie soit la moins chère possible. Ainsi, si l'utilisateur a besoin en milieu de journée de recharger rapidement son véhicule en hydrogène ou en électricité, il ne peut pas car la gestion de l'installation électrique n'avait pas pris en compte ce besoin imprévu.

### Résumé de l'invention

Un but de la présente invention est d'avoir un procédé de gestion qui gère une installation électrique en fonction du coût c'est-à-dire en prenant en compte le prix d'achat et de revente de l'électricité, le coût de la production d'hydrogène, mais aussi des besoins de l'utilisateur

Pour cela, la présente invention prévoit un procédé de gestion d'une installation de production et de stockage d'énergie comportant
- des moyens pour générer de l'électricité à partir d'énergie renouvelable,
- une connexion au réseau électrique,
- des moyens de stockage agencés pour stocker l'énergie électrique générée à partir d'énergie renouvelable ou par le réseau électrique,
- une unité consommatrice d'électricité agencée pour utiliser l'énergie produite par les moyens pour générer de l'électricité à partir d'énergie renouvelable et/ou du réseau électrique,
- un véhicule apte à se connecter à ladite installation et à utiliser l'énergie stockée dans les moyens de stockage ou l'énergie électrique des moyens pour générer de l'électricité à partir d'énergie renouvelable ou du réseau électrique,
- et des moyens de répartition comprenant un répartiteur d'énergie agencé pour répartir l'énergie électrique fournie par les moyens pour générer de l'électricité à partir d'énergie renouvelable et par le réseau
- une interface utilisateur agencée pour commander le contrôleur de gestion, caractérisé en ce que ledit procédé comprend les étapes suivantes :
   a) mesurer et analyser des paramètres de consommation du véhicule durant une période définie par l'intermédiaire de l'interface utilisateur ;
   b) calculer, à partir de ces mesures et analyses, des prévisions de consommation par le véhicule pour une période ultérieure équivalente à la période définie ;
   c) définir, en utilisant ces prévisions, des consignes et des contraintes de coûts pour le répartiteur d'énergie de sorte qu'il transfère suffisamment d'énergie issue des moyens pour générer de l'électricité à partir d'énergie renouvelable vers les moyens de stockage pour satisfaire aux consignes et aux contraintes,
   d) envoyer les consignes au répartiteur d'énergie et transférer l'énergie issue des moyens pour générer de l'électricité à partir d'énergie renouvelable vers les moyens de stockage, caractérisé en ce que les moyens de répartition sont aptes, à momentanément, passer outre les contraintes et à utiliser le réseau pour transférer suffisamment d'énergie vers le véhicule.

On comprendra que grâce au procédé de la présente invention, l'installation électrique est capable de prévoir, en fonction de la consommation moyenne mesurée, l'énergie électrique qui sera consommée dans un laps de temps défini et de produire cette énergie électrique en limitant les coûts. Néanmoins, le procédé selon la présente invention est capable de permettre à l'utilisateur de modifier les prévisions de consommation selon ses besoins tout en étant capable de modifier la production d'électricité en cas d'urgence : On comprend par la que l'installation électrique est capable de fournir de l'électricité en passant outre l'optimisation des couts si le besoin s'en fait sentir.

Dans un premier mode de réalisation avantageux, les consignes et les contraintes sont définies pour que le répartiteur d'énergie puisse transférer de l'énergie issue des moyens pour générer de l'électricité à partir d'énergie renouvelable vers le réseau ou vers l'unité consommatrice d'électricité.

Dans un second mode de réalisation avantageux, l'un des paramètres permettant de calculer des prévisions de consommation par le véhicule et de définir les consignes pour le répartiteur d'énergie est la météo permettant de faire des prédictions de production d'énergie à partir d'énergie renouvelable.

Dans un autre mode de réalisation avantageux, l'un des paramètres permettant de calculer des prévisions de consommation par le véhicule et de définir les consignes pour le répartiteur d'énergie est la consommation de l'unité consommatrice.

La présente invention a également pour objet une installation de production et de stockage d'énergie comportant
- des moyens pour générer de l'électricité à partir d'énergie renouvelable,
- une alimentation d'un réseau électrique,
- des moyens de stockage agencés pour stocker l'énergie électrique fournie par moyens pour générer de l'électricité à partir d'énergie renouvelable et par le réseau électrique,
- une unité consommatrice d'électricité agencée pour utiliser l'énergie des moyens pour générer de l'électricité à partir d'énergie renouvelable et/ou du réseau électrique,
   l'installation comprenant en outre un véhicule apte à se connecter à ladite installation et à utiliser l'énergie stockée dans les moyens de stockage ou l'énergie électrique des moyens pour générer de l'électricité à partir d'énergie renouvelable ou du réseau électrique, et des moyens de répartition comprenant un répartiteur d'énergie agencé pour répartir l'énergie électrique fournie par les moyens pour générer de l'électricité à partir d'énergie renouvelable et par le réseau et une interface utilisateur apte à commander ledit répartiteur d'énergie, à mesurer la consommation en énergie du véhicule pour prévoir ses besoins, pour pouvoir, en fonction du besoin en énergie du véhicule et du cout, transférer l'énergie électrique fournie par les moyens pour générer de l'électricité à partir d'énergie renouvelable vers l'unité consommatrice d'électricité, le réseau, les moyens de stockage ou le véhicule et à transférer l'énergie électrique du réseau vers l'unité consommatrice d'électricité, les moyens de stockage ou le véhicule, caractérisé en en ce que les moyens de répartition sont aptes, à momentanément, passer outre les contraintes et à utiliser le réseau pour transférer suffisamment d'énergie vers le véhicule.

Dans un premier mode de réalisation avantageux, les moyens de stockage sont des batteries.

Dans un second mode de réalisation avantageux, les moyens de stockage sont un électrolyseur créant de l'hydrogène avec l'énergie électrique des moyens pour générer de l'électricité à partir d'énergie renouvelable ou du réseau électrique.

Dans un troisième mode de réalisation avantageux, les moyens de stockage sont des batteries et un électrolyseur créant de l'hydrogène avec l'énergie électrique des moyens pour générer de l'électricité à partir d'énergie renouvelable ou du réseau électrique.

Dans un autre mode de réalisation avantageux, l'interface utilisateur est agencée pour mesurer et utiliser la consommation de l'unité consommatrice pour définir les prévisions de consommation du véhicule.

Dans un autre mode de réalisation avantageux, l'interface utilisateur est agencée pour utiliser la météo pour définir les prévisions de consommation du véhicule.

### Description sommaire des dessins

La figure 1 est le schéma de principe de l'installation selon la présente invention.
Les figures 2 à 8 représentent diverses vues de l'écran de contrôle de l'installation selon la présente invention.

### Description détaillée d'un mode de réalisation

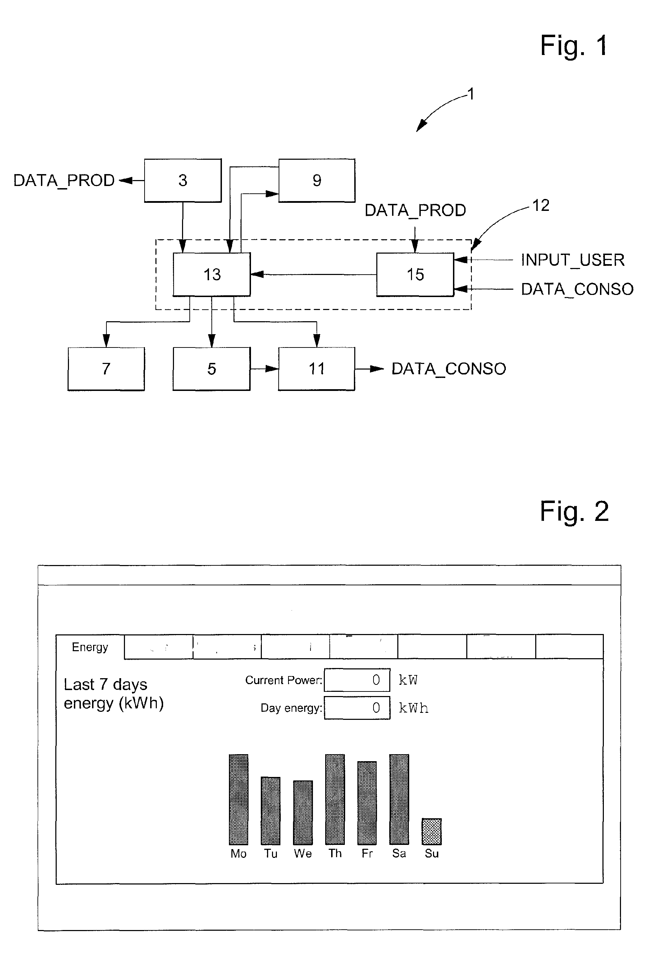

En se référant à la figure 1, on peut voir représentée une installation de production et de stockage d'énergie renouvelable 1 correspondant à un mode de réalisation particulier de la présente invention. On peut voir que cette installation 1 comprend notamment des moyens pour générer de l'électricité à partir d'énergie renouvelable 3 et des moyens de stockage 5 de cette énergie. Ces moyens de stockage 5 peuvent être constitués d'un électrolyseur permettant de convertir l'électricité fournie par les moyens 3 en énergie électrochimique par séparation de l'hydrogène et de l'oxygène de l'eau ou alors de batteries pour stocker l'électricité issu des moyens pour générer de l'électricité à partir d'énergie renouvelable 3. Bien entendu, il est envisageable que les moyens de stockage 5 comprennent à la fois l'électrolyseur et des batteries

De façon connue en soi, dans le présent mode de réalisation, les moyens 3 pour générer de l'électricité à partir d'énergie renouvelable sont formés d'une pluralité de cellules photovoltaïques assemblées sur des panneaux communément appelés panneaux solaires. On comprendra toutefois, que selon une variante, les moyens 3 pourraient être constitués par exemple par une ou plusieurs éoliennes, par une génératrice entraînée par une roue ou une turbine à eau, ou par tout autre dispositif connu de l'homme du métier et permettant de produire de l'électricité à partir d'énergie renouvelable.

La figure 1 montre encore que l'installation 1 comprend une unité consommatrice d'électricité 7 qui, dans le présent exemple, est formée par l'ensemble des installations électriques qui équipent une maison individuelle 7 comme le chauffage, l'éclairage et les divers appareils électroménagers. Bien évidemment, au lieu des installations électriques équipant une maison individuelle, il pourrait s'agir tout aussi bien, par exemple, des installations électriques équipant un bâtiment public, un hôpital ou encore une fabrique, etc. De même, il peut être prévu que l'unité consommatrice 7 comprenne des moyens pour utiliser les énergies à des fins autres que la production d'électricité. On entend par là que l'unité consommatrice 7 peut comprendre des pompes à chaleur, un système de chauffage au fioul ou mazout ou un système de chauffage à bois ou un système de chauffe-eau solaire utilisant des panneaux solaires pour chauffer un liquide qui va par échange thermique chauffer l'eau du ballon d'eau. Ces pompes à chaleur, ce système de chauffage au fioul ou mazout ou ce système de chauffage à bois ou ce système de chauffe-eau solaire peuvent également être entièrement gérés par ladite installation 1. L'installation 1 peut être coalimentée par un réseau 9 exploité par un fournisseur d'électricité en plus des moyens pour générer de l'électricité à partir d'énergie renouvelable 3. De plus, l'installation 1 peut assurer l'alimentation en énergie d'un véhicule 11. Ce véhicule 11 peut être un véhicule 11 tout électrique c'est-à-dire que des batteries alimentent des moteurs électriques ou alors un véhicule 11 comprennent des batteries et une pile à combustible que sorte que les moteurs électriques dudit véhicule 11 puisse être alimentés par l'électricité des batteries ou l'électricité issu de la réaction entre l'hydrogène et l'oxygène se produisant dans la pile à combustible.

On voit encore sur la figure 1 que l'installation 1 comprend en outre des moyens de répartition 12 qui comprennent un répartiteur d'énergie 13 qui reçoit l'électricité produite par les panneaux solaires 3 et celle du réseau électrique 9. Les moyens de répartition 12 comprennent en outre une interface utilisateur 15 prévu pour envoyer des consignes au répartiteur d'énergie 13 pour, notamment, gérer la répartition de l'énergie fournie par les panneaux solaires 3 et par le réseau entre l'unité consommatrice d'électricité 7, les moyens de stockage 5 et le véhicule 11.

Les moyens 3 fournissent de l'électricité en courant continu alors que les installations électriques qui équipent la maison sont, de façon habituelle, prévues pour fonctionner sous courant alternatif. C'est la raison pour laquelle un onduleur (non représenté) est encore prévu dans le répartiteur d'énergie 13. Grâce à cet onduleur, le répartiteur d'énergie 13 est en mesure de fournir un courant alternatif dont la phase et la tension sont compatible avec celles du réseau.

Conformément à la présente invention, l'électricité fournie, par les moyens pour générer de l'électricité à partir d'énergie renouvelable 3, peut être utilisée pour satisfaire les besoins en électricité de la maison 2 c'est-à-dire de l'unité consommatrice d'électricité 7 ou être envoyée sur le réseau 9 afin d'être vendue ou être stockée dans les moyens de stockage 5 ou être envoyée vers le véhicule 11. De même, l'installation 1 prévoit que l'électricité du réseau 9 puisse être envoyée vers l'unité consommatrice d'électricité 7 ou vers le véhicule 11 ou vers les moyens de stockage 5 dans le cas où ceux-ci comprennent un électrolyseur 4 permettant de convertir l'électricité en énergie électrochimique par séparation de l'hydrogène et de l'oxygène. Avec la possibilité d'alimenter en énergie un véhicule 11, la priorité est mise sur l'aspect mobilité de l'installation 1 c'est à dire que l'approvisionnement en énergie du véhicule 11 est prioritaire.

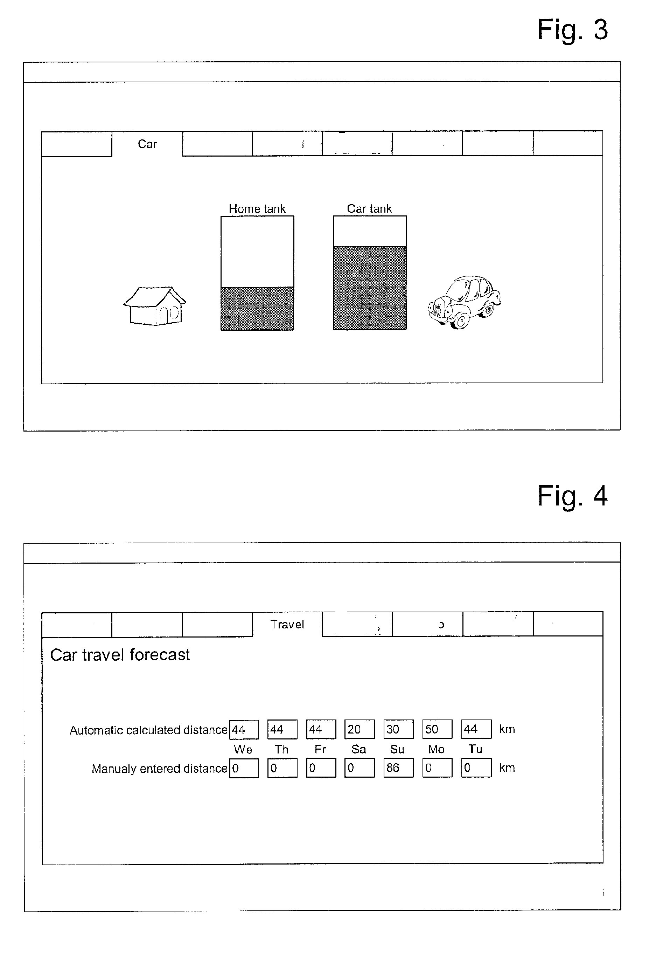

L'interface utilisateur 15 a pour fonction de mesurer les paramètres de l'installation 1 pour ensuite envoyer des consignes au répartiteur d'énergie 13 pour répartir l'énergie électrique. Pour cela, l'interface utilisateur mesure l'électricité produite chaque jour par les moyens pour générer de l'électricité à partir d'énergie renouvelable 3 pour obtenir la valeur de la production journalière (DATA_PROD) et la consommation journalière en électricité ou en hydrogène pour obtenir la valeur de consommation (DATA_CONSO) du véhicule 11 avec le nombre de kilomètres parcourus comme visible à la figure 2 où l'on peut voir la consommation des sept derniers jours. Ces mesures de production et de consommation sont analysées par ladite interface utilisateur 15. Celle-ci est également capable de mesurer l'énergie électrique toujours présente dans le véhicule 11 comme visible à la figure 3, ce dernier pouvant être considéré virtuellement comme un second moyen de stockage. Dans cette figure 3 on peut voir le niveau de charge du véhicule 11 et des moyens de stockage 5. Ces mesures et analyses sont effectuées afin que l'interface utilisateur 15 puisse définir les consignes à envoyer au répartiteur d'énergie 13.

La production d'électricité par des panneaux solaires se fait la journée à un moment où le véhicule n'est en théorie pas branché sur l'installation 1 car utilisé. La recharge en électricité ou en hydrogène du véhicule 11 se fait donc la nuit. Il est, par conséquent, nécessaire de produire cette électricité ou hydrogène, pendant la journée, afin de recharger le véhicule la nuit.

Ainsi, le procédé de gestion selon la présente invention utilise les mesures de production et de consommation pour faire des statistiques et faire des prévisions c'est-à-dire prévoir l'électricité qui sera nécessaire pour satisfaire aux besoins de l'utilisateur, en particuliers du véhicule 11 comme visible à la figure 4. L'interface 15 fait ses mesures sur une période de temps déterminée afin de faire ses prévisions sur une période de temps égale à la période de temps déterminée.

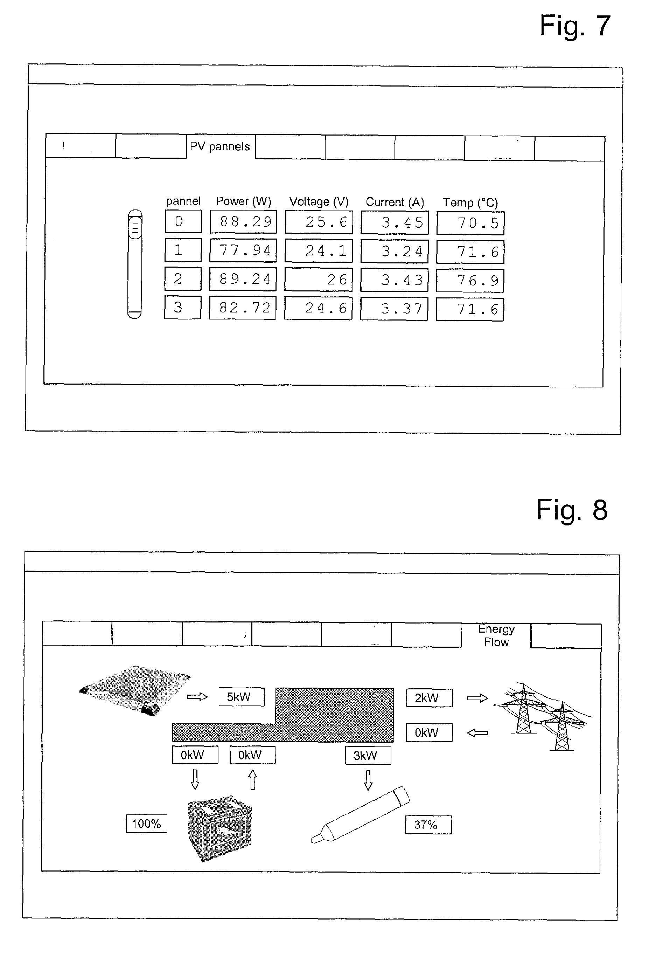

A la suite de cette analyse, l'interface 15 va envoyer des consignes au répartiteur d'énergie 13 qui va répartir l'énergie des panneaux solaires 3 et du réseau 9 en fonction des consignes reçues. Comme dit précédemment, la priorité est mise sur l'aspect mobilité de l'installation 1 c'est à dire que l'approvisionnement en énergie du véhicule 11 est prioritaire mais cet approvisionnement est effectué en prenant en compte le coût de l'énergie. On entend par là que l'électricité produite par les moyens pour générer de l'électricité à partir d'énergie renouvelable 3 est dirigé en priorité vers les moyens de stockage 5 qui rechargeront le véhicule 11. Le trop plein de production d'électricité est alors envoyé vers l'unité consommatrice d'électricité 7 ou vers le réseau 9 afin d'être revendu. Il peut être programmé que l'exacte quantité d'énergie électrique ou électrochimique soit dirigée vers les moyens de stockage 5 ou qu'un surplus d'énergie électrique ou électrochimique de sécurité soit prévu pour pallier à un léger imprévu. On voit sur la figure 8 un exemple de répartition de l'énergie produite dans l'installation 1.

Avantageusement selon l'invention, l'interface utilisateur 15 est configurée pour permettre à l'utilisateur de modifier les prévisions. En effet, le principe du procédé est de faire des statistiques de consommation du véhicule 11 pour ensuite prévoir la production d'électricité. Or, l'interface utilisateur 15 ne fait que des prévisions et il est envisageable que l'utilisateur puisse ponctuellement avoir besoin de plus d'énergie, qu'elle soit sous forme d'électricité ou sous forme d'hydrogène. L'interface utilisateur 15 est donc agencée pour indiquer à l'utilisateur les prévisions de consommation et de kilomètres, mais aussi pour lui permettre d'influer sur les prévisions comme visible à la figure 4 où il est visible une ligne permettant d'entrer des données. Effectivement, dans le cas où l'utilisateur sait qu'il devra, certains jours, faire plus de kilomètres c'est-à-dire consommer plus d'électricité, il a la possibilité d'entrer manuellement le nombre de kilomètres modifiés. Pour cela, il sélectionne le jour où il prévoit de consommer plus que prévu et il entre le nombre de kilomètres qu'il pense parcourir. Cela permet à l'interface utilisateur 15 d'envoyer des consignes au répartiteur d'énergie 13 afin que celui-ci dirige plus d'énergie vers les moyens de stockage 5.

Par ailleurs, il se peut que les conditions météo, par exemple le niveau d'ensoleillement dans le cas de panneaux solaires, ne soit pas être suffisante pour permettre aux moyens pour générer de l'électricité à partir d'énergie renouvelable 3 de fournir l'énergie nécessaire pour le véhicule 11. Dans ce cas, le répartiteur d'énergie 13 est agencé pour utiliser l'électricité du réseau 9 qui est plus coûteuse, pour la diriger vers les moyens de stockage 5. Ainsi, la mobilité est privilégiée au détriment des coûts puisque le niveau de charge des moyens de stockage 5 est privilégié par rapport aux coûts.

Si l'installation 1 est programmée pour permettre à l'utilisateur de modifier, par avance, sa consommation, elle est aussi capable d'ajuster la répartition d'électricité en cas d'urgence. En effet, il peut arriver le cas où l'utilisateur apprend dans la journée qu'il doit parcourir une distance plus grande. L'utilisateur rentre alors chez lui pour recharger son véhicule 11. Il connecte son véhicule 11 sur l'installation 1 et agit sur l'interface utilisateur 15 via une commande (INPUT_USER). Il agit sur l'interface utilisateur 15 pour demander à ce que son véhicule 11 soit rechargé. Pour cela, il peut simplement entrer le nombre de kilomètres qu'il doit parcourir ou sélectionner un mode de recharge préprogrammé pour recharger rapidement le véhicule 11. Dans les deux cas, l'interface utilisateur 15 va privilégier la recharge au dépend du coût. Pour cela, l'interface utilisateur 15 va utiliser l'énergie du réseau 9. Effectivement, l'électricité du réseau 9 est illimitée dans le sens où elle est disponible en quantité quasi illimité à l'échelle d'un consommateur et surtout avec une intensité élevée constante parfaite pour une recharge rapide.

Bien entendu, on peut prévoir que la recharge en urgence soit automatique. Pour cela, l'interface utilisateur 15 peut être programmée pour qu'en dehors de certaines heures, le programme de charge d'urgence se mette en fonction si l'installation 1 détecte que le véhicule 11 est connecté. En effet, en temps normal, le véhicule 11 est connecté à l'installation la nuit, d'environ 18h jusqu'à 8h, pour être rechargée. On peut en conclure d'une connexion du véhicule 11 en dehors de cette plage horaire signifie un besoin urgent en énergie électrique ou électrochimique. L'interface utilisateur 15 peut en conséquence directement brancher le réseau 9 au véhicule 11 si celui-ci à besoin d'électricité ou branché le réseau 9 aux moyens de stockage 5 pour rapidement fabriquer de l'hydrogène.

Bien entendu, on comprendra que les moyens de répartition 12 sont également agencés pour gérer les pompes à chaleur et le ou les systèmes de chauffe-eau solaire de sorte que l'électricité fournit par les moyens 3 puisse être envoyée vers les pompes à chaleur et/ou le système de chauffage au fioul ou mazout et/ou le système de chauffage à bois et/ou le système de chauffe-eau solaire pour combler un manque d'énergie.

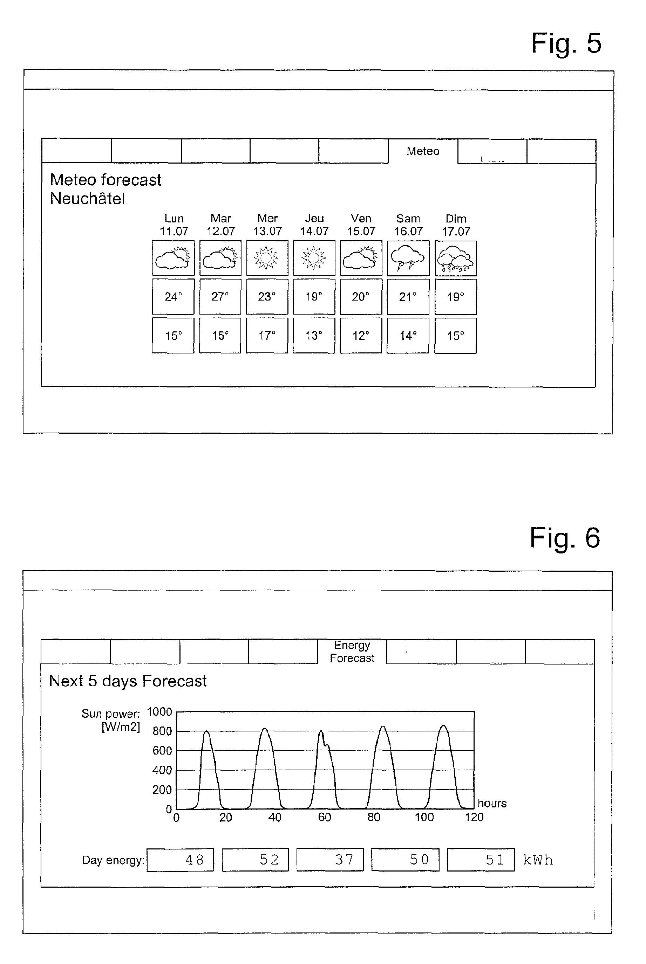

Dans une variante du procédé selon l'invention, l'interface utilisateur 15 prend également en compte la météo pour prévoir la production d'énergie électrique ou électrochimique comme visible aux figures 5 et 6. Dans ces figures 5 et 6 on peut voir respectivement les prévisions météo et les prédictions de production d'énergie. En effet, pour la production d'électricité à partir d'énergie renouvelable, la météo est un élément important car sans vent, pas d'énergie issue des éoliennes et sans soleil pas d'énergie issue des panneaux solaires. L'interface utilisateur 15 selon la présente invention est donc capable de recevoir, d'une manière quelconque comme par exemple par le réseau internet ou pas radio, des informations sur la météo à venir. L'interface utilisateur 15 utilise ces informations météorologiques pour prévoir la production d'énergie à partir d'énergie renouvelable. Cela permet de pouvoir diriger, certains jours, plus d'énergie électrique vers les moyens de stockage 5 afin de compenser les jours durant lesquels les conditions météo seront défavorables. Il peut être également prévu que l'interface utilisateur 15 compense les conditions météo défavorables en ayant recours

Dans une seconde variante, l'installation 1 est connectée au réseau 9 de façon interactive. En effet, il peut être prévu que l'installation 1 puisse fournir ses données de production, de prévisions et de consommation aux fournisseurs d'énergie qui alimentent le réseau 9. Cette variante permet aux fournisseurs d'avoir un retour d'informations sur la consommation et sur la production des installations 1 des ménages. Ainsi, les fournisseurs peuvent faire leurs prévisions de production en fonction de ces retours d'informations pour ajuster la production au plus juste et éviter tout gaspillage. Dans la figure 7, on peut voir les informations de production des panneaux solaires qui sont envoyés pour information aux fournisseurs d'énergie.

Dans une autre variante, l'installation 1 est agencée pour que les moyens de répartition 12 soient aptes à suivre l'état de la pile à combustible du véhicule 11. Effectivement, une pile à combustible est un élément qui vit c'est-à-dire qui évolue dans le temps. Particulièrement, on observe que le rendement varie avec la durée de vie de sorte qu'il diminue avec le temps. On comprend alors que la quantité d'hydrogène et d'oxygène pour parcourir la même distance augmentera avec le temps. De ce fait, le fait de savoir l'état de la pile à combustible permet d'adapter les prévisions de productions d'hydrogène ou d'électricité en fonction de l'usure de la pile à combustible et de la baisse de rendement. Bien entendu, cette variante peut être appliquée pour des batteries d'un véhicule 11 car les batteries ont aussi un rendement qui varie avec la durée de vie.

On comprendra que selon la présente invention, grâce au principe de répartition de l'électricité produite par les panneaux solaires entre l'alimentation directe de la maison 2 et la production d'hydrogène, le coût de revient de l'hydrogène est réduit par rapport à l'hydrogène produit par une installation de l'art antérieur. De plus, la possibilité de disposer d'hydrogène d'origine renouvelable à prix réduit permet de réduire de coût de revient d'une voiture écologique fonctionnant à l'hydrogène.

On comprendra que diverses modifications et / ou améliorations évidentes pour l'homme du métier peuvent être apportées aux différentes modes de réalisation de l'invention décrits dans la présente description sans sortir du cadre de l'invention.

## Revendications

1. Installation de production et de stockage d'énergie (1) comportant
- des moyens (3) pour générer de l'électricité à partir d'énergie renouvelable,
- une alimentation d'un réseau électrique,
- des moyens de stockage agencés pour stocker l'énergie électrique fournie par moyens (3) pour générer de l'électricité à partir d'énergie renouvelable et par le réseau électrique,
- une unité consommatrice d'électricité (7) agencée pour utiliser l'énergie des moyens (3) pour générer de l'électricité à partir d'énergie renouvelable et/ou du réseau électrique,
l'installation comprenant en outre un véhicule apte à se connecter à ladite installation et à utiliser l'énergie stockée dans les moyens de stockage ou l'énergie électrique des moyens (3) pour générer de l'électricité à partir d'énergie renouvelable ou du réseau électrique, et des moyens de répartition comprenant un répartiteur d'énergie agencé pour répartir l'énergie électrique fournie par les moyens (3) pour générer de l'électricité à partir d'énergie renouvelable et par le réseau et une interface utilisateur apte à commander ledit répartiteur d'énergie, à mesurer la consommation en énergie du véhicule pour prévoir ses besoins, pour pouvoir, en fonction du besoin en énergie du véhicule et du cout, transférer l'énergie électrique fournie par les moyens (3) pour générer de l'électricité à partir d'énergie renouvelable vers l'unité consommatrice d'électricité (7), le réseau, les moyens de stockage ou le véhicule et à transférer l'énergie électrique du réseau vers l'unité consommatrice d'électricité (7), les moyens de stockage ou le véhicule, caractérisé en en ce que les moyens de répartition 12 sont aptes, à momentanément, passer outre les contraintes et à utiliser le réseau pour transférer suffisamment d'énergie vers le véhicule.

2. Installation selon la revendication 1 **caractérisé en ce que** les moyens de stockage sont des batteries.

3. Installation selon la revendication 1 **caractérisé en ce que** les moyens de stockage sont un électrolyseur créant de l'hydrogène avec l'énergie électrique des moyens (3) pour générer de l'électricité à partir d'énergie renouvelable ou du réseau électrique.

4. Installation selon la revendication 1 **caractérisé en ce que** les moyens de stockage sont des batteries et un électrolyseur créant de l'hydrogène avec l'énergie électrique des moyens (3) pour générer de l'électricité à partir d'énergie renouvelable ou du réseau électrique.

5. Installation selon la revendication 1 **caractérisé en ce que** l'interface utilisateur 15 est agencée pour mesurer et utiliser la consommation de l'unité consommatrice 7 pour définir les prévisions de consommation du véhicule 11.

6. Installation selon la revendication 1 **caractérisé en ce que** l'interface utilisateur 15 est agencée pour utiliser la météo pour définir les prévisions de consommation du véhicule 11.

7. Procédé de gestion d'une installation de production et de stockage d'énergie (1) comportant
- des moyens (3) pour générer de l'électricité à partir d'énergie renouvelable,
- une alimentation d'un réseau électrique,
- des moyens de stockage agencés pour stocker l'énergie électrique fournie par moyens (3) pour générer de l'électricité à partir d'énergie renouvelable et par le réseau électrique,
- une unité consommatrice d'électricité (7) agencée pour utiliser l'énergie des moyens (3) pour générer de l'électricité à partir d'énergie renouvelable et/ou du réseau électrique,
- un véhicule apte à se connecter à ladite installation et à utiliser l'énergie stockée dans les moyens de stockage ou l'énergie électrique des moyens (3) pour générer de l'électricité à partir d'énergie renouvelable ou du réseau électrique,
- et des moyens de répartition (12) comprenant un répartiteur d'énergie agencé pour répartir l'énergie électrique fournie par les moyens (3) pour générer de l'électricité à partir d'énergie renouvelable et par le réseau et une interface utilisateur agencée pour commander le contrôleur de gestion, **caractérisé en ce que** ledit procédé comprend les étapes suivantes :
a) mesurer et analyser des paramètres de consommation du véhicule durant un laps de temps défini par l'intermédiaire de l'interface utilisateur,
b) calculer, à partir de ces mesures et analyses, des prévisions de consommation par le véhicule pour un laps de temps ultérieur équivalent au laps de temps défini ;
c) définir, en utilisant ces prévisions, des consignes et des contraintes de coûts pour le répartiteur d'énergie de sorte qu'il transfert suffisamment d'énergie issue des moyens (3) pour générer de l'électricité à partir d'énergie renouvelable vers les moyens de stockage pour satisfaire aux consignes et aux contraintes,
d) envoyer les consignes au répartiteur d'énergie (15) et transférer l'énergie issue des moyens (3) pour générer de l'électricité à partir d'énergie renouvelable vers les moyens de stockage,
**caractérisé en ce que** les moyens de répartition sont aptes, à momentanément, passer outre les contraintes et à utiliser le réseau pour transférer suffisamment d'énergie vers le véhicule.

8. Procédé de gestion selon la revendication 7, **caractérisé en ce que** les consignes et les contraintes sont définies pour que le répartiteur d'énergie puisse transférer de l'énergie issue des moyens (3) pour générer de l'électricité à partir d'énergie renouvelable vers le réseau ou vers l'unité consommatrice d'électricité (7).

9. Procédé de gestion selon la revendication 7, **caractérisé en ce que** l'un des paramètres permettant de calculer des prévisions de consommation par le véhicule et de définir les consignes pour le répartiteur d'énergie est la météo permettant de faire des prédictions de production d'énergie à partir d'énergie renouvelable.

10. Procédé de gestion selon la revendication 7, **caractérisé en ce que** l'un des paramètres permettant de calculer des prévisions de consommation par le véhicule et de définir les consignes pour le répartiteur d'énergie est la consommation de l'unité consommatrice 7.
